# FASCICULE DE BREVET EUROPEEN

(11) **EP 0 767 843 B1**
(45) Date de publication et mention de la délivrance du brevet: **28.10.1998**
(21) Numéro de dépôt: 95914284.5
(22) Date de dépôt: 21.03.1995
(51) Int. Cl.: C21C 5/52, F27D 3/14, F27B 3/18, B22D 41/12, B61D 3/16

(54) **PROCEDE ET DISPOSITIF D'ENFOURNEMENT DIRECT DE METAL LIQUIDE D'UNE POCHE DANS UN FOUR ELECTRIQUE**
VERFAHREN UND VORRICHTUNG ZUM BESCHICKEN EINES ELEKTROOFENS MIT FLÜSSIGMETALL
METHOD AND DEVICE FOR DIRECTLY FEEDING LIQUID METAL FROM A LADLE INTO AN ELECTRIC FURNACE

(30) Priorité: 29.06.1994 LU 88505
(43) Date de publication de la demande: 16.04.1997
(73) Titulaire: PAUL WURTH S.A., 1122 Luxembourg (LU)
(72) Inventeur: KAELL, Norbert, 4635 Differdange (LU); PETRY, Rudy, 5372 Muensbach (LU)
(74) Mandataire: Freylinger, Ernest T.
(86) Numéro de dépôt international: EP9501052
(87) Numéro de publication internationale: WO9600799

(56) Documents cités:
- EP-A- 0 328 510
- DE-A- 1 756 637
- DE-B- 1 180 764
- DE-B- 1 210 970
- DE-B- 1 284 576
- FR-A- 648 530

## Description

La présente invention décrit un procédé et un dispositif d'enfournement direct de métal liquide d'une poche dans un four électrique.

Une grande partie du recyclage de la ferraille est effectuée à l'aide de fours électriques tels que des fours à arc. Ces fours permettent de faire fondre et de réutiliser la ferraille ainsi traitée pour fabriquer de nouveaux produits en acier.

Un certain nombre d'éléments résiduels contenus dans la ferraille tels que le cuivre, le nickel, etc., ne peuvent être séparés de l'acier et se retrouvent par conséquent dans les produits finis. Plus la ferraille a subi des opérations de recyclage, plus importante sera la concentration de ces éléments résiduels. Ces derniers constituent une gêne pour la fabrication de certains produits tels que les tôles etc.

Un moyen de diminuer la concentration en éléments résiduels dans l'acier obtenu à partir de ferraille consiste à ajouter de la fonte liquide dans le four électrique.

Cependant, lorsqu'on déverse du métal liquide à partir d'une poche dans un four électrique à l'aide d'une grue ou d'un pont roulant, il est très difficile de contrôler le débit de fonte en provenance de la poche. En effet, le débit n'est pas constant et varie en fonction de l'angle d'inclinaison de la poche. De plus, il est très difficile de contrôler l'angle d'inclinaison d'une poche suspendue à un pont roulant ou à une grue. Lors du déversement incontrôlé de métal liquide dans le four, une partie de ce métal liquide ou de l'acier partiellement fondu contenu dans le four est projetée en dehors du four et l'impact de la fonte liquide risque d'endommager les panneaux de refroidissement revêtant l'intérieur du four.

Le document DE-B-1284576 décrit un chariot comprenant sommier pour le transport d'une poche contenant du métal liquide. La poche peut être soulevée et abaissée par un premier vérin et peut être penchée latéralement au moyen d'un deuxième vérin indépendant du premier pour verser du métal liquide de la poche dans un four électrique.

Les documents DE-B-1180764, FR-A-648530 et DE-B-1210970 décrivent des dispositifs d'enfournement dans lesquels la poche est soulevée et basculée en un seul mouvement moyennant un seul vérin.

Le but de la présente invention consiste à trouver un procédé et un dispositif permettant de verser d'une manière contrôlée du métal liquide dans un four électrique.

Ce but est atteint par un procédé d'enfournement direct de métal liquide d'une poche dans un four électrique comprenant essentiellement les étapes suivantes:
- avancement d'un chariot transportant une poche remplie de métal en fusion jusqu'à une position initiale à proximité du four électrique
- abaissement et translation horizontale coordonné de la poche jusqu'à ce que le bord supérieur de la poche se trouve au dessus du four électrique;
- basculement, soulèvement progressif et translation graduelle horizontale coordonné de la poche de manière à ce que le bord supérieur de la poche soit maintenu dans une position permettant de verser le métal liquide dans le four;
- versement du métal liquide dans le four;
- basculement, abaissement et translation horizontale coordonné de la poche afin de revenir à la position initiale.

Le métal liquide n'est plus déversé dans le four au moyen d'une grue ou d'un pont roulant mais la poche est manipulée moyennant un chariot qui lui permet d'effectuer un mouvement complexe et contrôlé. Le bord supérieur de la poche qui est de préférence équipé d'un bec verseur, est maintenu en permanence à une faible distance au dessus du bord du four. La hauteur de chute du métal liquide se trouve ainsi considérablement réduite par rapport à un déversement du métal liquide à partir d'une poche moyennant une grue ou un pont roulant. Par conséquent le risque d'endommager des panneaux de refroidissement et/ou le réfractaire est faible.

Les projections de métal liquide et d'acier fondu sont réduites car le débit de versement du métal liquide peut être choisi de manière à minimiser ces projections.

De préférence le chariot et/ou la poche sont pesés en continu avant le remplissage de la poche et pendant tout le déversement du métal liquide de la poche. De cette manière, il est possible de déterminer et de documenter éventuellement le débit de métal liquide déversé lors de chaque opération. Ceci permet d'adapter en permanence le mouvement complexe effectué par la poche pendant le déversement. On pourra ainsi calculer un mouvement optimal à effectuer par la poche.

On a trouvé, lors des travaux qui ont abouti à cette invention, que les débits en métal liquide peuvent varier sensiblement d'une poche à l'autre, en fonction p. ex. de la forme de leur bec verseur et de l'usure du revêtement réfractaire des poches etc. En marquant les différentes poches on peut établir un mouvement optimal de déversement pour chaque poche, par la mesure du débit via le pesage en continu de la poche pendant le déversement du métal liquide dans le four.

Si le débit devenait, par moment, trop important, la vitesse de basculement ou même l'angle d'inclinaison pourrait être diminué momentanément jusqu'à ce que le débit se soit à nouveau stabilisé. L'automatisation du contrôle et de l'adaptation permet d'effectuer la régulation du débit en temps réel.

La présente invention propose aussi un dispositif pour la mise en oeuvre du procédé. Ce dispositif d'enfournement direct de métal liquide d'une poche dans un four électrique est essentiellement caractérisé par:
- un chariot comprenant un sommier support
- deux bras à mâchoire manoeuvrables autour d'un premier axe, permettant la montée et la descente d'une poche placée par des bretelles dans les bras à mâchoire
- un deuxième double bras manoeuvrable autour d'un deuxième axe dont le centre de rotation coïncide avec un axe passant par des tourillons montés sur les bretelles permettant d'octroyer un mouvement de rotation à la poche
- des moyens pour actionner les bras à mâchoire et les doubles bras.

Un des avantages de ce chariot est que la poche peut être soulevée ou abaissée et basculée en même temps ou de manière indépendante. Il est donc possible de soulever la poche, respectivement de l'abaisser sans devoir nécessairement changer son angle d'inclinaison.

Le soulèvement, respectivement l'abaissement et le basculement de la poche peuvent être actionnés par des moyens hydrauliques tels que des vérins ou par des moyens électromécaniques. Il est à noter que l'un des mouvements peut être réalisé par des moyens hydrauliques tandis que l'autre mouvement peut être réalisé par des moyens électromécaniques.

Le poids de la poche peut être déterminé en permanence par les moyens hydrauliques et/ou par les moyens électromécaniques utilisés pour effectuer les mouvements de la poche.

Avantageusement la poche est fermée par un couvercle, de préférence par un couvercle en un matériau réfractaire pendant son transport afin de limiter les déperditions calorifiques. Ce couvercle est enlevé avant que le chariot n'arrive dans la position initiale précédent le déversement du métal liquide.

Ce procédé et ce dispositif peuvent être utilisés avec tous les types de fours électriques.

Il est cependant particulièrement avantageux de les utiliser en combinaison avec un four électrique comprenant un balcon latéral d'enfournement. En effet, ce procédé et ce dispositif d'enfournement permettent de réduire les dimensions d'un tel balcon d'enfournement, car il est possible de verser avec un très grande précision le métal liquide dans le four à partir d'une poche. Puisque le débit peut être maintenu à une valeur prédéterminée, le balcon d'enfournement latéral peut être adapté dans ses dimensions au débit de la poche. Si on n'utilisait pas ce procédé et ce dispositif, on devrait nécessairement surdimensionner le balcon latéral d'enfournement. Toute la construction du four devrait donc être adaptée en conséquence. C'est surtout le cas lorsqu'il s'agit d'un four de type EBT (à trou de coulée excentrique), qui est pivotable sur un siège basculant; il faut alors, attacher des contrepoids au côté du four qui est opposé au balcon afin de permettre au four de revenir automatiquement dans sa position horizontale après avoir été basculée lors de la coulée de l'acier liquide. Si l'on peut réduire la taille du balcon latéral d'enfournement grâce à la présente invention, les contrepoids pourront être de plus faibles dimensions et la construction du four électrique reviendra moins chère.

Des avantages et caractéristiques supplémentaires ressortiront de la description détaillée des modes de réalisation avantageux de l'invention, présentés ci-dessous, à titre d'illustration exclusivement, en se référant aux dessins annexés, dans lesquels:
- la Figure 1 montre un diagramme de la variation du poids d'une poche contenant du métal liquide en fonction de son angle d'inclinaison;
- les Figures 2A, 2B et 2C montrent une vue latérale du chariot d'enfournement de métal liquide dans un four électrique ainsi que les moyens supportant la poche dans le chariot;
- les Figures 3A, 3B et 3C montrent une séquence d'enfournement de métal liquide dans un four électrique;

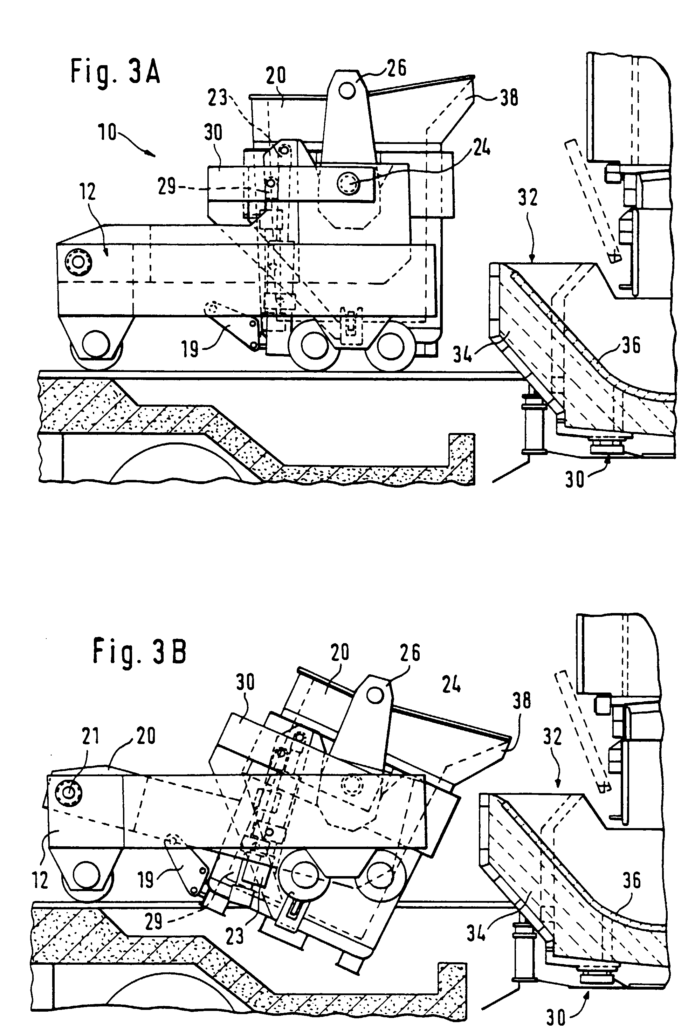

- la Figure 3A montre le chariot dans sa position initiale à proximité d'un four électrique;
- la Figure 3B montre le chariot et la poche au début du versement;

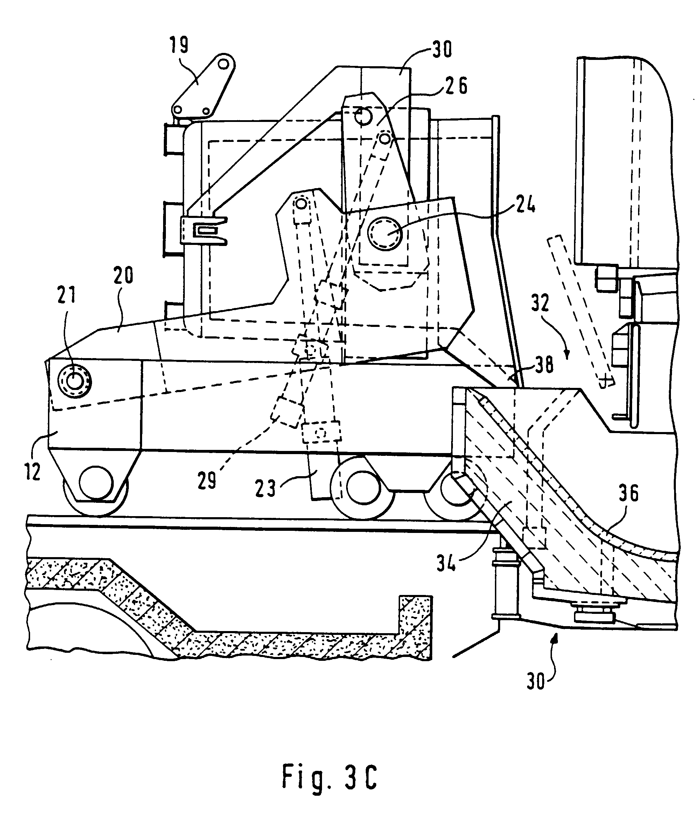

- la Figure 3C montre le chariot dans la position qu'il occupe à la fin du versement proprement dit;

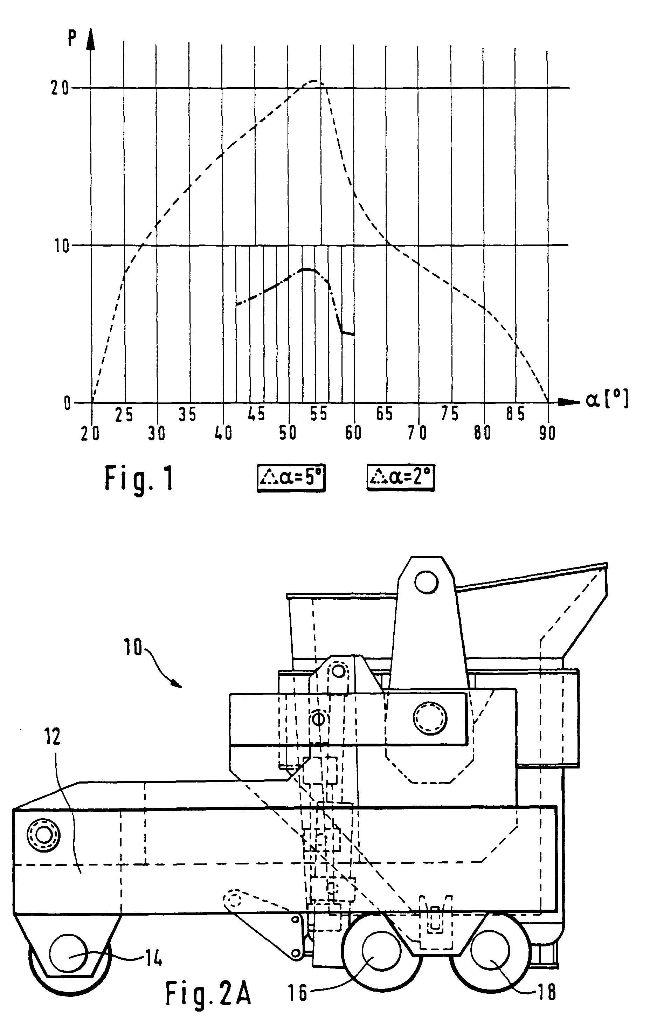

La Figure 1 représente un diagramme de la variation du contenu d'une poche donnée par rapport à son angle d'inclinaison. Ce diagramme montre que la quantité déversée n'est pas constante en fonction de l'angle d'inclinaison de la poche, mais qu'elle passe par un maximum pour un angle bien déterminé. On voit que ce maximum dépend aussi de la variation de l'angle d'inclinaison de la poche. Si la variation de l'angle est moins importante, telle que représentée sur la courbe inférieure (2° au lieu de 5°), le maximum est moins prononcé. Il est évident que ce diagramme a été réalisé pour une poche de forme bien déterminée. Ce diagramme varie considérablement en fonction de la géométrie de la poche et varie aussi, pour une même poche, en fonction de l'usure progressive du revêtement du réfractaire intérieur de la poche.

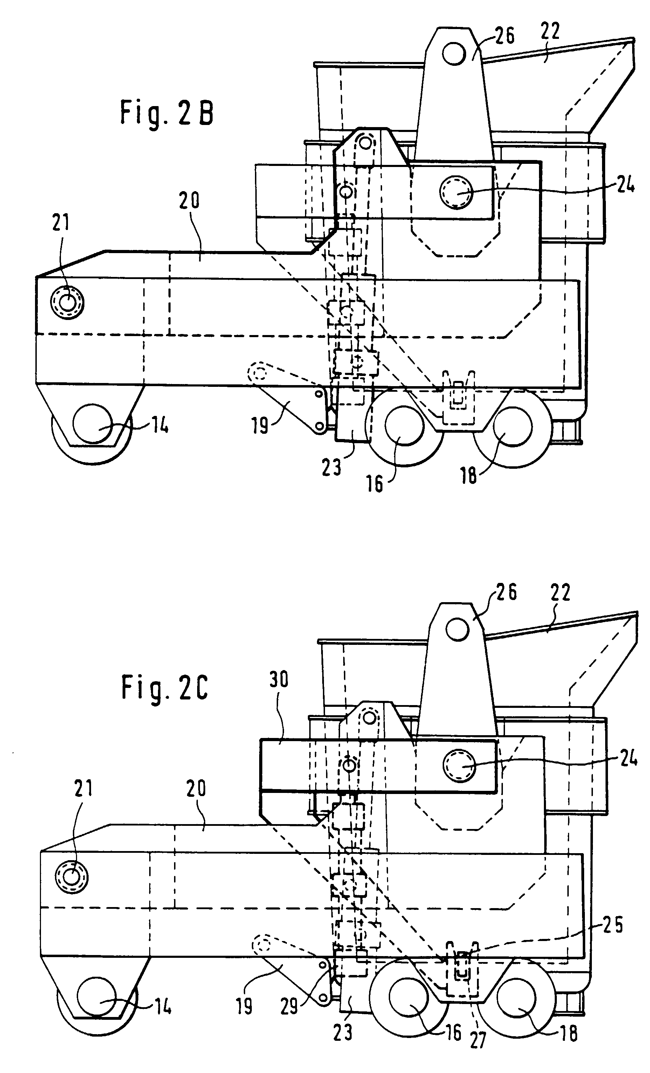

Les Figures 2A, 2B et 2C montrent un dispositif d'enfournement direct de métal liquide d'une poche dans un four électrique. Le chariot 10 comprend un sommier de support 12 équipé de trois axes 14,16,18.

Sur la Figure 2B on voit clairement l'un des deux bras à mâchoire 20 articulé sur un axe 21 situé sur le sommier de support 10 en dehors de la poche 22. Le bras 20 est manoeuvrable par un piston 23, fixé d'une manière pivotable par une première extrémité sur le sommier 12 et par une deuxième extrémité sur le bras 20, permettant ainsi la montée et la descente de la poche 22 qui est placée par des bretelles 26 dans les bras à mâchoire 20. La poche 22 est fixé au sommier 12 par un dispositif d'ancrage 19. Ce dispositif empêche que la poche 22 ne pivote dans les bras à mâchoires 20 pendant le transport.

La Figure 2C montre un deuxième double bras 30 manoeuvrable dont le centre de rotation coïncide avec l'axe des tourillons 24 permettant à la poche 22 d'effectuer un mouvement de rotation. Une extrémité du double bras 30 est fixée aux tourillons 24 de la poche 22. A sa base, la poche 22 est équipée d'un tenon 25 qui vient se loger dans une rainure 27 aménagée à l'autre extrémité du double bras 30. Un piston 29, fixé d'une manière pivotable par une extrémité sur le bras à mâchoire 20 et par son autre extrémité sur le double bras 30, permet de pencher la poche 22 autour d'un axe passant par les tourillons 24.

Les figures 3A, 3B et 3C montrent une séquence de déversement de fonte liquide dans un four électrique. Sur la figure 3A, on voit un dispositif 12 d'enfournement direct de métal liquide monté sur un chariot 10 dans la position initiale à proximité d'un four électrique 30. Le four 30 comprend, dans cet exemple, un balcon latéral d'enfournement 32 par lequel le métal liquide est introduit dans le four 30. Le balcon 32 est recouvert, à l'intérieur, par une épaisse couche de réfractaire 34. Une plaque choc 36 en réfractaire spécial est maçonnée sur le fond dudit balcon 32 afin de protéger le réfractaire 34 des chocs de l'impact de la fonte liquide. Une poche 22 comprenant un bec verseur 38, remplie de fonte liquide est déposée sur le chariot 10.

La Figure 3B montre la deuxième phase de versement juste avant le commencement du versement de la fonte liquide dans le balcon d'enfournement. La poche 22 a été abaissée par une mouvement du piston 23 et penchée de manière à ce que le bec verseur 38 se trouve au-dessus du balcon 32. Puisque la poche 22 est fixée par son extrémité inférieure au sommier 12 par le dispositif d'ancrage 19, la poche est penchée sans intervention directe du double bras 30. On note la faible distance entre le bec verseur 38 et le balcon 32, ce qui permet de réduire l'énergie de l'impact de la fonte liquide dans le balcon 32 sur le réfractaire 34, 36. A cause de cette faible hauteur de chute, les projections de fonte liquide sont limitées, ce qui augmente la sécurité du personnel travaillant à proximité du four électrique.

La figure 3C montre la poche en position lors de la fin du versement de la fonte liquide dans le four électrique 30. La poche 32 se trouve maintenant en position horizontale et toute la fonte peut s'écouler de la poche 22. Il est important de souligner que la poche 22 ne doit pas nécessairement être vidée complètement. Il peut en effet arriver, si on ne veut introduire qu'une quantité bien déterminée de fonte dans le four 30 , que la poche 22 ne doit être vidée qu'à moitié p.ex. Il est évident que dans un tel cas la poche 22 ne sera pas penchée jusqu'à la position horizontale.

Pour pencher la poche 22 jusqu'à une position prédéterminée, le dispositif d'ancrage 19 est détaché du sommier 13 et en actionnant le piston 29 on impose un mouvement de basculement à la poche 22 autour de l'axe passant par les tourillons 24. En actionnant le piston 23 il est possible de soulever et d'abaisser la poche 22 indépendamment de l'angle d'inclinaison de la poche 22 de manière à minimiser la hauteur de chute de la fonte.

Lorsque la poche 22 est vide ou lorsque la quantité voulue de fonte a été versée dans le four 30, la poche 22 revient dans sa position initiale en effectuant les mêmes mouvements mais dans l'ordre inverse.

## Revendications

1. Procédé d'enfournement direct de métal liquide d'une poche (22) dans un four électrique (30) comprenant les étapes suivantes:
- avancement d'un chariot (10) transportant une poche (22) comprenant un bord supérieur et un bord inférieur et étant remplie de métal en fusion jusqu'à une position initiale à proximité du four électrique (30)
- abaissement et translation horizontale coordonné de la poche (22) jusqu'à ce que le bord supérieur de la poche (22) se trouve au-dessus du four électrique (30);
- basculement, soulèvement progressif et translation graduelle horizontale coordonné de la poche (22) de manière à ce que le bord supérieur de la poche (22) soit maintenu en une position permettant de verser le métal liquide dans le four (30),
- versement du métal liquide dans le four (30),
- basculement, abaissement et translation horizontale coordonné de la poche (22) afin de revenir à la position initiale.

2. Procédé selon la revendication 1, caractérisé en ce que le débit de métal liquide est déterminé en pesant le chariot (10) en continu pendant tout l'opération de déversement et en ce que la variation de l'angle d'inclinaison de la poche est réglée en fonction du débit de métal liquide..

3. Procédé selon l'une quelconque des revendications 1 ou 2, caractérisé en ce que
- la poche (22) est abaissée au moyen de deux bras à mâchoire (20) dans laquelle la poche (22) est suspendue et qui sont articulés autour d'un premier axe,
- la poche (22) est basculée moyennant un deuxième double bras (30) manoeuvrable autour d'un deuxième axe dont le centre de rotation coïncide avec un axe passant par des tourillons (24) montés sur les bretelles (26) et permettant d'octroyer un mouvement de rotation à la poche(22),
et en ce que la poche (22) est soulevée progressivement au moyen desdits deux bras à mâchoire (20).

4. Procédé d'enfournement direct de métal liquide selon la revendication 3 caractérisé en ce que le premier axe de rotation se situe en dehors de la poche (22) sur le sommier support.

5. Dispositif d'enfournement direct de métal liquide d'une poche (22) dans un four électrique comportant un chariot (10) comprenant un sommier support caractérisé par :
- deux bras à mâchoire (20) manoeuvrables autour d'un premier axe, permettant la montée et la descente d'une poche (22) placée par des bretelles (26) dans les bras à mâchoire (20)
- un deuxième double bras (30) manoeuvrable autour d'un deuxième axe dont le centre de rotation coïncide avec un axe passant par des tourillons (24) montés sur les bretelles (26) et permettant d'octroyer un mouvement de rotation à la poche (22),
- des moyens pour actionner les bras à mâchoire (20) et les doubles bras.

6. Dispositif selon la revendication 5, caractérisé en ce que le premier axe de rotation se situe en dehors de la poche (22) sur le sommier support (12).

7. Dispositif selon la revendication 5, caractérisé par au moins un premier vérin hydraulique (23) actionnant les deux bras à mâchoire (20).

8. Dispositif selon la revendication 5, caractérisé par au moins un vérin hydraulique (29) actionnant le second double bras (30).

9. Dispositif selon la revendication 5, caractérisé en ce que les deux bras à mâchoire (20) sont entraînés par des moyens électromécaniques.

10. Dispositif selon la revendication 5, caractérisé en ce que le second double bras (30) est entraîné par des moyens électromécaniques.

11. Dispositif selon l'une quelconque des revendications 5 à 10, caractérisé par des moyens pour peser la poche (22) en continue pendant toute l'opération de déversement.

12. Dispositif selon l'une quelconque des revendications 5 à 11, caractérisé par un couvercle en un matériau réfractaire qui recouvre la poche (22) en position de transport jusqu'à la position initiale

## Claims

1. Method for directly charging an electric furnace with liquid metal from a ladle essentially comprising the following steps:
- movement of a carriage carrying a ladle having an upper rim and a lower rim and filled with molten metal to an initial position near the electric furnace;
- coordinated lowering and horizontal translation of the ladle until the upper rim of the ladle is positioned above the electric furnace;
- coordinated tilting, progressive raising and gradual horizontal translation of the ladle in such a way that the upper rim of the ladle is held in a position enabling the liquid metal to be poured into the furnace;
- pouring of the liquid metal into the furnace;
- coordinated tilting, lowering and horizontal translation of the ladle in order to return it to its initial position.

2. Method according to Claim 1, characterised in that the flow rate of the liquid metal is determined by continuously weighing the carriage during the whole pouring operation and in that the variation of the angle of inclination of the ladle is regulated as a function of the flow rate of the liquid metal.

3. Method according to either of Claims 1 or 2, characterised in that
- the ladle is lowered by means of two arms with jaws in which the ladle is suspended and which are articulated around a first axis,
- the ladle is tilted by means of a second double arm manoeuvrable around a second axis whose centre of rotation coincides with an axis passing through journals mounted on the suspension arms and enabling a rotational movement to be given to the ladle,
and in that the ladle is progressively raised by means of the said two arms with jaws.

4. Device for directly charging with liquid metal according to Claim 3, characterised in that the first rotation axis is located outside the ladle on the supporting frame.

5. Device for directly charging an electric furnace with liquid metal from a ladle characterised by:
- a carriage with a supporting frame;
- two arms with jaws, manoeuvrable around a first axis, making it possible to raise and lower a ladle placed by suspension arms into the arms with jaws;
- a second arm manoeuvrable around a second axis whose centre of rotation coincides with an axis passing through journals mounted on the suspension arms and making it possible to give a rotational movement to the ladle;
- means for actuating the arms with jaws and the double arms.

6. Device according to Claim 5, characterised in that the first axis of rotation is located outside the ladle 22 on the supporting frame.

7. Device according to Claim 5, characterised by at least one first hydraulic actuator operating the two arms with jaws.

8. Device according to Claim 5, characterised by at least one hydraulic actuator operating the double arm.

9. Device according to Claim 5, characterised in that the two arms with jaws are driven by electro-mechanical means.

10. Device according to Claim 5, characterised in that the double arm is driven by electro-mechanical means.

11. Device according to any one of Claims 5 to 10, characterised by means for weighing the ladle continuously during the whole pouring operation.

12. Device according to any one of Claims 5 to 11, characterised by a cover made of a refractory material which covers the ladle while it is being transported to its initial position.

## Patentansprüche

1. Verfahren zur direkten Beschickung eines Elektroofens (30) mit flüssigem Metall aus einer Pfanne (22) das folgende Schritte umfaßt :
- Vorwärtsbewegung eines Wagens (10), der eine Pfanne (22) transportiert, welche einen oberen Rand und einen unteren Rand hat und mit geschmolzenem Metall gefüllt ist, bis zu einer Ausgangsstellung vor einem Elektroofen (30),
- koordiniertes Absenken und waagrechtes Heranfahren der Pfanne (22) bis sich der obere Rand der Pfanne (22) über dem Elektroofen (30) befindet,
- koordiniertes Kippen, allmähliches Anheben und schrittweises waagrechtes Heranfahren der Pfanne (22), so daß der obere Rand der Pfanne (22) in einer Stellung gehalten wird, in der das flüssige Metall in den Ofen (30) gegossen werden kann,
- Entleeren des flüssigen Metalls in den Ofen (30),
- koordiniertes Kippen, Absenken und waagrechtes Zurückfahren der Pfanne (22), um sie wieder in die Ausgangsstellung zu bringen.

2. Verfahren nach Anspruch 1, dadurch gekennzeichnet, daß der Gießstrahl flüssigen Metalls bestimmt wird, indem der Wagen (10) während des gesamten Entleerungsvorgangs fortlaufend gewogen wird, sowie dadurch, daß die Veränderung des Neigungswinkels der Pfanne in Abhängigkeit von dem Gießstrahl flüssigen Metalls geregelt wird.

3. Verfahren nach irgendeinem der Ansprüche 1 oder 2, dadurch gekennzeichnet, daß
- die Pfanne (22) mit Hilfe zweier Backenhebel (20) abgesenkt wird, in denen die Pfanne (22) aufgehängt ist und die um eine erste Achse gelagert sind,
- die Pfanne (22) mittels eines zweiten Doppelhebels (30) gekippt wird, der um eine zweite Achse beweglich ist, deren Drehpunkt mit einer Achse zusammenfällt, welche durch Kippzapfen (24) verläuft, die an die Pfannengehänge (26) montiert sind und durch die die Pfanne (22) in eine Drehbewegung versetzt werden kann,
- sowie dadurch, daß die Pfanne (22) mittels der beiden Backenhebel (20) allmählich angehoben wird.

4. Verfahren zur direkten Beschickung mit flüssigem Metall nach Anspruch 3, dadurch gekennzeichnet, daß die erste Drehachse außerhalb der Pfanne (22) auf dem Stützträger gelegen ist.

5. Vorrichtung zur direkten Beschickung eines Elektroofens mit flüssigem Metall aus einer Pfanne (22), die einen Wagen (10) mit einem Stützträger umfaßt,
gekennzeichnet durch:
- zwei Backenhebel (20), die um eine erste Achse beweglich sind und durch die eine mit Pfannengehängen (26) in den Backen hebeln (20) eingesetzte Pfanne (22) auf- und abbewegt werden kann,
- einen zweiten Doppelhebel (30), der um eine zweite Achse beweglich ist, deren Drehpunkt mit einer Achse zusammenfällt, die durch an die Pfannengehänge (26) montierte Kippzapfen (24) verläuft, und durch den die Pfanne (22) in eine Drehbewegung versetzt werden kann,
- Mittel zur Betätigung der Backenhebel (20) und der Doppelhebel.

6. Vorrichtung nach Anspruch 5, dadurch gekennzeichnet, daß die erste Drehachse außerhalb der Pfanne (22) auf dem Stützträger (12) gelegen ist.

7. Vorrichtung nach Anspruch 5, gekennzeichnet durch mindestens einen ersten hydraulischen Zylinder (23), der die beiden Backenhebel (20) betätigt.

8. Vorrichtung nach Anspruch 5, gekennzeichnet durch mindestens einen hydraulischen Zylinder (29), der den zweiten Doppelhebel (30) betätigt.

9. Vorrichtung nach Anspruch 5, dadurch gekennzeichnet, daß die beiden Backenhebel (20) mit elektromechanischen Mitteln angetrieben werden.

10. Vorrichtung nach Anspruch 5, dadurch gekennzeichnet, daß der zweite Doppelhebel (30) mit elektromechanischen Mitteln angetrieben wird.

11. Vorrichtung nach irgendeinem der Ansprüche 5 bis 10, gekennzeichnet durch Mittel zum fortlaufenden Wiegen der Pfanne (22) während des gesamten Entleerungsvorgangs.

12. Vorrichtung nach irgendeinem der Ansprüche 5 bis 11, gekennzeichnet durch einen Deckel aus einem hitzebeständigen Material, der die in der Transportstellung befindliche Pfanne (22) bis zur Ausgangsstellung bedeckt.
